# EUROPÄISCHE PATENTSCHRIFT

(11) **EP 1 089 412 B1**
(45) Veröffentlichungstag und Bekanntmachung des Hinweises auf die Patenterteilung: **17.12.2003**
(21) Anmeldenummer: 00117223.8
(22) Anmeldetag: 11.08.2000
(51) Int. Cl.: H02G 3/12

(54) **Installationsgerät mit Spreizkrallenanordnung**
Installation equipment with retractable mounting claws
Appareil d'installation avec des griffes de coincement rétractables

(30) Priorität: 28.09.1999 DE 19946416
(43) Veröffentlichungstag der Anmeldung: 04.04.2001
(73) Patentinhaber: Heinrich Kopp AG, D-63796 Kahl (DE)
(72) Erfinder: Schmitt, Emil, 63796 Kahl am Main (DE)
(74) Vertreter: Reinhard - Skuhra - Weise & Partner

(56) Entgegenhaltungen:
- EP-A- 0 349 937
- EP-A- 0 780 946
- EP-A- 0 854 554
- EP-A- 0 915 537

## Beschreibung

Die Erfindung betrifft ein eine Spreizkrallenvorrichtung aufweisendes Unterputz- In stallationsgerät, gemäß dem Oberbegriff des Patentanspruchs 1.

Bei der Elektroinstallation in Gebäuden werden in die unter Putz befindlichen Aufnahmedosen üblicherweise Installationsgeräte, z. B. UP-Installationsschalter, einzeln eingebracht und verdrahtet. Zur Verankerung der Installationsgeräte in den Aufnahmedosen sind die Installationsgeräte üblicherweise mit einer Spreizkrallenvorrichtung versehen.

Derartige Installationsgeräte bestehen im allgemeinen aus einer Tragplatte mit einer in der Mitte angeordneten Ausnehmung zur Aufnahme des Schaltgehäuses, das die verschiedenen Kontakte trägt bzw. enthält, und aus zwei einander gegenüberliegend angeordneten Spreizkrallen mit einer jeder Spreizkralle zugeordneten Stellschraube. Damit die Spreizkrallen in ihrer Drehachse positioniert sind, sind von der Unterseite der Tragplatte in Lageröffnungen eingesetzte Füße der Spreizkrallen auf der Oberseite der Tragplatte in einer aufeinander zuweisenden Richtung umgebogen.

Beim Einbau von Installationsgeräten in Wandeinbaudosen erfolgt eine Verankerung bzw. Befestigung der Geräte mittels der dafür paarweise vorgesehenen Spreizkrallen. Diese befinden sich bei der Montage in einer vorbestimmten Ausgangsstellung, bei der die Spreizkrallen nur etwas von der senkrechten Stellung bezüglich der Tragplatte abweichend nach außen geneigt sind und ein Zwischenraum zwischen jeder Spreizkralle und der entsprechenden Innenwand der Aufnahmedose gewährleistet ist. Nach dem Einsetzen des Installationsgerätes in die Wandeinbaudose erfolgt ein Verstellen der Spreizkrallen mittels der Stellschrauben, wobei durch das Drehen der Stellschrauben die Spreizkrallen in eine zweite Stellung, einer Verankerungsstellung, mit einer größeren Abweichung von der senkrechten Position bezüglich der Tragplatte verdreht werden. Dadurch wird ein Eingreifen spitzer Haken am unteren Ende jeder Spreizkralle in die entsprechende Innenwand der Aufnahmedose bewirkt. Durch diese Verankerung wird das Installationsgerät fest in der Wandeinbaudose verankert.

Als nachteilig bei obigen bekannten Spreizkrallenvorrichtungen für Installationsgeräte hat sich die Tatsache herausgestellt, daß bei einer Demontage des Installationsgerätes aus der entsprechenden Wandeinbaudose die Spreizkrallen selbst beim Lösen der Stellschraube weiterhin in ausgespreizter Stellung bleiben und mit ihren Haken an der Innenwand in der Aufnahmedose verhakt bleiben. Damit kommt es bei der Demontage von Installationsgeräten nicht selten zu Schwierigkeiten bei dem Versuch, sie aus der Dose zu entfernen oder zu einer Schädigung der Innenwände der Aufnahmedose bzw. des Putzes an der Außenseite der Aufnahmedose.

Zur Vermeidung dieser Probleme werden gelegentlich Gummiringe eingesetzt, welche das Spreizkrallenpaar in die Ausgangsstellung zurück vorspannen.

Jedoch wird ein solcher Gummiring mit der Zeit porös und spröde und erfüllt daher langfristig nicht die Rückstellwirkung der Spreizkrallen.

Aus der EP 0 349 937 Al ist eine Unterputz-Wandeinbaudose mit einem Sockel und einem Tragring bekannt, bei der die Spreizkrallen am Sockel angelenkt sind und die Stellschrauben jeweils ein Befestigungsloch der Spreizkrallen lose durchgreifen. Die Spreizkrallen selbst sind über einen Abschnitt an einer Sockelkante schwenkbar gegen die Wirkung einer Blattfeder gehalten, die sich an einem Abstandssteg lose abstützt, welcher den Sockel und den Tragring verbindet.

Der Erfindung liegt die Aufgabe zugrunde, ein Unterputz- Installationsgerät zu schaffen, bei dem die Sprezkrallen vorrichtung eine dauerhafte Rückstellung der Spreizkrallen in die Ausgangsposition bzw. in eine individuelle einstellbare Montageposition ermöglicht.

Diese Aufgabe wird erfindungsgemäß durch die im kennzeichnenden Teil des Patentanspruchs 1 angegebenen Merkmale gelöst.

Weitere Ausgestaltungen und Merkmale der Spreizkrallenvorrichtung ergeben sich aus den Unteransprüchen.

Erfindungsgemäß stützt sich die Stellschraube an der Tragplatte ab, und die Spreizkralle, die an der Tragplatte schwenkbar gelagert ist, weist eine hinterschnittene Aussparung mit einer Lasche auf, die eine Gewindebohrung für den Eingriff der Stellschraube besitzt.

Gemäß einer bevorzugten Weiterbildung der Spreizkrallerivorrichtung ist die Rückstellfeder als Biegefederelement ausgebildet. Vorzugsweise wird eine Blattfeder als Biegefederelement verwendet, die aus nichtrostendem Federbandstahl besteht. Somit wird mittels eines einfachen billigen zusätzlichen Bauteils eine Vorspannung der Spreizkrallen in die Ausgangsposition erreicht, wobei das zusätzliche Federelement mindestens die Lebensdauer des Installationsgerätes besitzt.

Gemäß einer weiteren bevorzugten Ausbildung ist einerstes Ende der Rückstellfeder gabelförmig ausgebildet und weist einen Führungsschlitz für die Stellschraube auf. Somit kann die zusätzliche Rückstellfeder in die übliche Spreizkrallenvorrichtung ohne eine Änderung irgendeines Bauteils und ohne Zuhilfenahme weiterer Bauelemente integriert werden.

Gemäß einer weiteren bevorzugten Ausbildung ist das gabelförmige Ende der Rückstellfeder mit Abstützfüßen zum Abstützen auf der Unterseite der Tragplatte versehen. Dadurch ist ein dauerhafter Kontakt zwischen dem Federelement und der Tragplatte gewährleistet und die Feder wird beim Ausspreizen jeder Spreizkralle mittels der Stellschraube kontinuierlich zunehmend gespannt, so daß im gesamten funktionalen Schwenkbereich der Spreizkralle eine ausreichende Rückstellkraft während des Zurückdrehens der Stellschraube vom gespreizten Zustand der Spreizkralle in die Ausgangsposition vorhanden ist. Somit bewegen sich die Spreizkrallen exakt in einem vorbestimmten Schwenkbereich und können weder verkanten noch sonst eine ungünstige Position einnehmen. Jede Spreizkralle wird durch die Federkraft des Rückstellelements in ihrer Lagerstelle bzw. Drehachse positioniert. Damit entfällt das bisher erforderliche Umbiegen der Füße zur Krallenfixierung an der Oberseite der Tragplatte.

Gemäß einer weiteren Ausführungsform sind an einem zweiten Ende jeder Rückstellfeder Klemmeinrichtungen vorgesehen, die als schräg zur Fläche der Rückstellfeder abgebogene Schenkel ausgebildet sind.

Gemäß einer weiteren bevorzugten Ausführungsform nimmt die hinterschnittene Aussparung jeder Spreizkralle des mit Klemmschenkeln versehene Ende der Rückstellfeder auf. Damit ist sowohl eine manuelle als auch eine vollautomatische Montage der Rückstellfeder mit einfachen Hilfsmitteln in die herkömmliche Spreizkrallenvorrichtung möglich.

Gemäß einer weiteren Ausführungsform weist jede Spreizkralle zwei im wesentlichen parallel zueinander verlaufende Füße auf, die in in der Tragplatte ausgebildete Öffnungen eingesetzt sind. Dies ermöglicht eine einfache Montage der Spreizkralle an der Tragplatte und die Spreizkralle ist somit im Zusammenspiel mit der Rückstellfeder um eine vorbestimmte Drehachse schwenkbar.

Nachfolgend wird die Erfindung unter Bezugnahme auf die beigefügte Zeichung zur Erläuterung weiterer Merkmale näher erläutert. Es zeigen:
- Fig. 1: eine Draufsicht auf ein Ausführungsbeispiel einer Tragplatte gemäß der vorliegenden Erfindung;
- Fig. 2: eine Vorderansicht auf ein Ausführungsbeispiel eines Installationsgerätes mit einer Spreizkrallenvorrichtung gemäß der voliegenden Erfindung im eingebauten Zustand, teilweise im Schnitt;
- Fig. 3: eine Seitenansicht auf ein Installationsgerät mit der Spreizkrallenvorrichtung gemäß Fig. 2;
- Fig. 4: eine vergrößerte Ansicht der Spreizkrallenvorrichtung gemäß Fig. 2 in einer ersten und einer zweiten Position, im Schnitt; und
- Fig. 5: eine perspektivische Ansicht auf das Federelement und die entsprechende Spreizkralle im nicht zusammengebauten Zustand gemäß einem Ausführungsbeispiel, der vorliegenden Erfindung.

Nachfolgend wird eine bevorzugte Ausführungsform des erfindungsgemäßen UP-Installatimsgeräts beschrieben, die eine Spreizkrallenvorrichtung 1 aufweist.

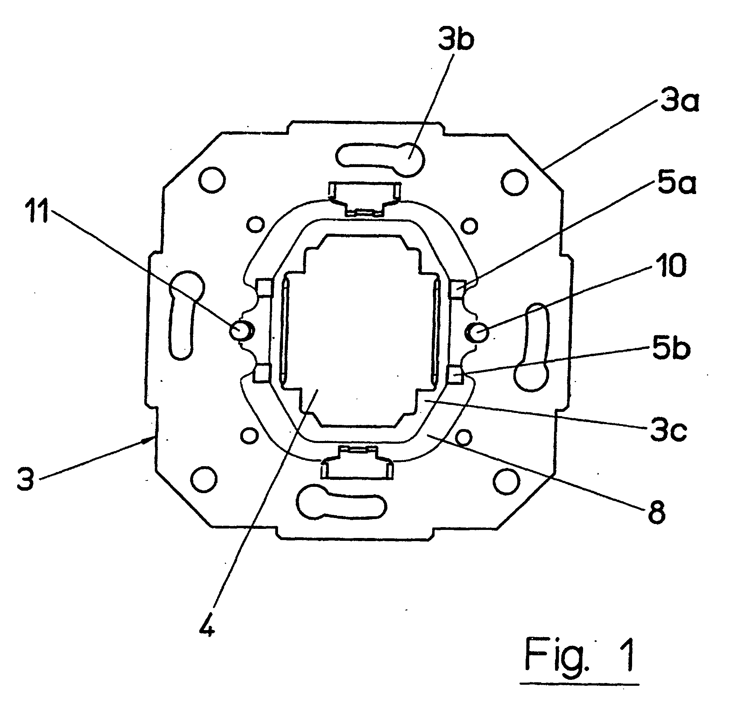

Fig. 1 zeigt eine Draufsicht auf eine Tragplatte 3 eines UP-Installationsschalters 2 gemäß einem Ausführungsbeispiel vorliegender Erfindung.

Die Tragplatte 3 weist beispielsweise eine quadratische Form auf, wie sich aus Fig. 1 ergibt. Die Form dieser Tragplatte 3 kann in bekannter Weise ausgestaltet sein, beispielsweise mit abgeschrägten Ecken 3a und mit gegebenenfalls umlaufend verteilt angeordneten Schlitzen 3b zur Durchführung von Schrauben oder anderen Befestigungsmitteln. Im Zentrum der Tragplatte 3 befindet sich eine Ausnehmung 3c, die kreisrund, oval oder dergleichen ausgebildet sein kann und zur Aufnahme eines Schaltergehäuses 4 dient.

Die im wesentlichen ebene Tragplatte 3 ist weiterhin mit Lageröffnungen 5a, 5b versehen, wobei jeweils ein derartiges Paar von Lageröffnungen 5a, 5b zur Aufnahme einer von zwei Spreizkrallen 6, 7 dient, die in an sich bekannter Weise einander gegenüberliegend in die Tragplatte 3 eingesetzt werden. Die Lageröffnungen 5a, 5b befinden sich nahe der Ausnehmung 3c etwa innerhalb eines vertieften Abschnittes 8 der Tragplatte 3, der ebenfalls kreisrund oder ovalförmig umlaufend ausgebildet ist und sich nach außen an die Ausnehmung 3c anschließt.

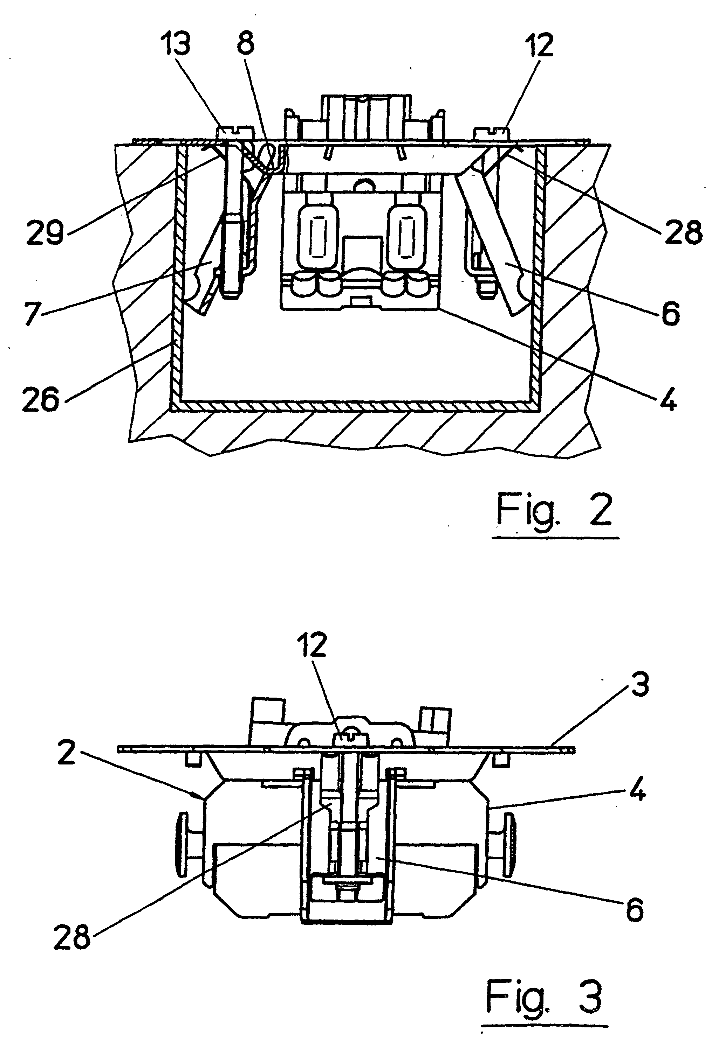

Die Tragplatte 3 ist weiterhin mit ebenfalls einander gegenüberliegend ausgebildeten Paaren von Öffnungen 10, 11 versehen, die zur Aufnahme von Stellschrauben 12, 13 (Fig. 2) dienen, welche wiederum der Verstellung der Spreizkrallen 6, 7 dienen. Die Öffnungen 10, 11 befinden sich auf einer Linie, die mittig gegenüber den beiden Paaren der Lageröffnungen 5a, 5b verläuft, wie sich aus Fig. 1 ergibt.

Wie die Figuren 2 bis 5 zeigen, haben die Spreizkrallen 6, 7 im wesentlichen U-Profil. Zwischen zwei im wesentlichen zueinander parallel verlaufenden Schenkeln befindet sich eine Verbindungswand 17, die mittig derart hinterschnitten ist, daß eine Lasche 18 aus der Ebene der Wand 17 herausgebogen ist. Die Lasche 18 definiert eine Aussparung 19 in der Wand 17 und ist mit einem abgewinkelten Abschnitt 20, in welchem eine Gewindebohrung 21 festgelegt ist, und mit einer Schräge 24 versehen, wobei diese Schräge 24 am von der Ebene der Wand 17 entfernteren Ende des abgewinkelten Abschnitts 20 ausgebildet ist und somit den Abschnitt 20 und die Lasche 18 miteinander verbindet.

Erfindungsgemäß ist jede Spreizkralle 6, 7 mit vorspringenden Füßen 22, 23 versehen, wobei die Füße als Verlängerungen der Schenkel 15, 16 ausgebildet sind und im Gegensatz zu bekannten Spreizkrallen nicht abgebogen, sondern parallel zueinander verlaufen, d.h. in Flucht zu den betreffenden Schenkeln 15, 16 und dazu dienen, in die Lageröffnungen 5a, 5b eingesetzt zu werden.

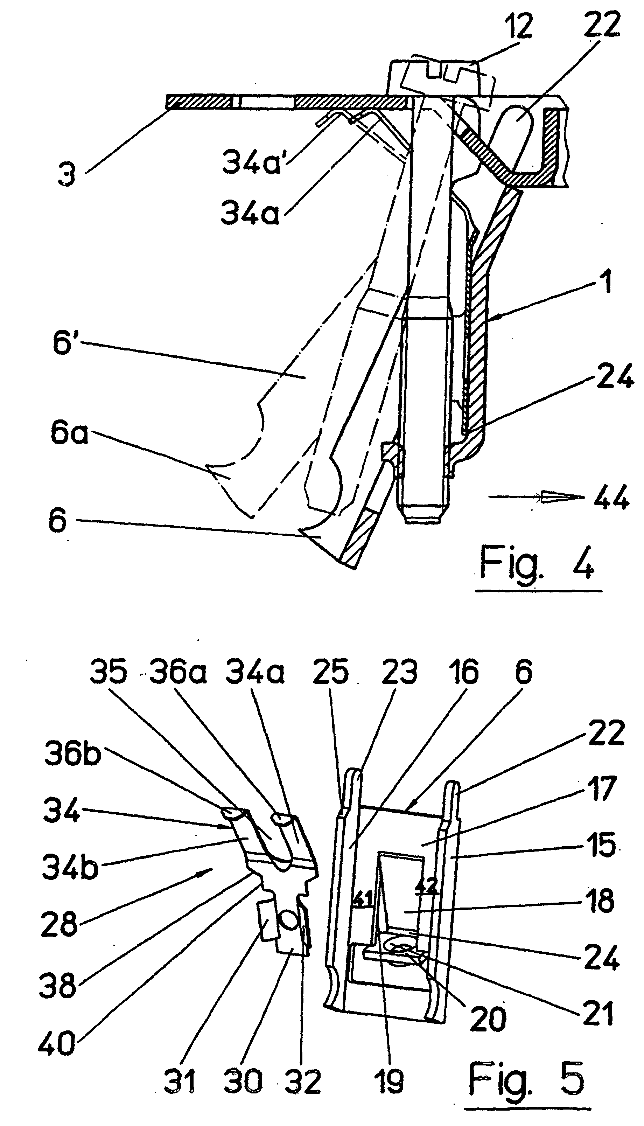

Die Füße 22, 23 verbleiben auch nach dem Einsetzen in die Lagerplatte 3 in der in Fig. 5 gezeigten Position, d.h. sie werden nicht abgebogen, wodurch das Einbringen der Spreizkrallen 6, 7 erfindungsgemäß gegenüber dem Stand der Technik vereinfacht ist.

Zur Erzielung eines Abstützeffektes sind die Füße 22, 23 gegenüber den Schenkeln 15, 16 von reduzierter Breite, wie durch die in Fig. 5 mit 25 angedeutete Abflachung dargestellt ist. Die Füße 22, 23 und die Schenkel 15, 16 stehen im wesentlichen vorzugsweise senkrecht zur Wand 17 von dieser ab.

Fig. 2 zeigt eine Vorderansicht eines in eine Wandeinbaudose 26 eingebauten UP-Installationsschalters 2 mit der Tragplatte 3, dem in die Ausnehmung 3b der Tragplatte 3 eingesetzten Schaltergehäuses 4 und mit den zwei einander gegenüberliegend angeordneten Spreizkrallen 6, 7. Aus Fig. 2 ist auch die Vertiefung bzw. Sicke 8 erkennbar, welche die Lageröffnungen 5a, 5b enthält, in die die Füße 22, 23 der Spreizkrallen 6, 7 eingesetzt sind, wobei sich die Spreizkrallen 6, 7 durch die Abflachung 25 an der Vertiefung 8 abstützen.

Die Spreizkrallen 6, 7 sind in an sich bekannter Weise gegenüber der Tragplatte 3 verstellbar um eine Achse, die senkrecht zur Zeichenebene in Fig. 2 steht und etwa durch die Lageröffnungen 5a, 5b definiert ist.

Die erfindungsgemäße Spreizkrallenvorrichtung 1 ist bezüglich jeder Spreizkrallen 6, 7 mit einem Federelement 28, 29 versehen. Die Fig. 3 und 5 zeigen das Federelement 28 im Detail in Verbindung mit der zugehörigen Spreizkralle 6, während aus den Fig. 2 und 4 die Einstellbarkeit und Funktion erkennbar ist.

Jedes Federelement 28, 29 weist ein Ende 30 auf, welches seitliche, schräg abstehende Klemmschenkel 31, 32 trägt. Weiterhin ist jedes Federelement 28, 29 durch ein Gabelförmiges Ende 34 definiert. Die Gabelabschnitte 34a, 34b sind durch einen Schlitz 35 getrennt. Die Gabelabschnitte 34a, 34b verlaufen im wesentlichen parallel zueinander und sind mit Stützfüßen 36a, 36b versehen, die als gegenüber den Gabelabschnitten 34a, 34b abgeschrägte Abschnitte ausgebildet sind.

Das gabelförmige Ende 34 ist gegenüber der Ebene des Endabschnittes 30 bereits geringfügig geneigt. Zum Einsetzen jedes Federelementes 28 ist das Federelement 28 durch einen schräg auf das Ende 30 zulaufenden Abschnitt 38 in einer zur Längsachse des Federelementes 28 symmetrischen Weise festgelegt, wobei sich an den schrägen Abschnitt 38 ein gerade verlaufender Abschnitt 40 anschließt. Die Stufe zwischen den Abschnitten 38, 40 dient zur Abstützung jedes Federelementes 28, 29 auf den seitlich zur Lasche 18 verlaufenden Flächen 41, 42 der Wand 17.

Der Fußabschnitt des Endes 30 des Federelementes stützt sich bei in die Spreizkralle 6 eingesetztem Federelement 28 vorzugsweise auf der Schräge 24 der Lasche 18 ab.

Erfindungsgemäß ist vorgesehen, daß jedes Federelement 28, 29 in die zugehörige Spreizkralle 6, 7 eingesetzt ist, sobald die Spreizkralle 6, 7 mit den Füßen 22, 23 in die Tragplatte 3 eingeführt ist und bevor die Stellschrauben 12, 13 durch die Öffnungen 10, 11 eingesetzt und in den betreffenden Gewindebohrungen 21 eingeschraubt werden. Fig. 3 zeigt in Seitenansicht die Spreizkralle 6 mit eingesetztem Federelement 28. Daraus ist ersichtlich, daß die beiden Gabelabschnitte 34a, 34b die Stellschraube 12 teilweise seitlich übergreifen, wobei die Gabelabschnitte 34a, 34b gemäß Fig. 4 im wesentlichen schräg zur betreffenden Stellschraube 12, 13 verlaufen und sich an der unteren Fläche der Tragplatte 3 mittels der Abstützfüße 36a, 36b abstützen. Auf diese Weise wird eine Vorspannung erzeugt, dadurch, daß jedes Federelement 28, 29 zwischen der unteren Fläche der Tragplatte 3 und der Schräge 24 der Lasche 18 wirksam ist. Die durch die Federelemente 28, 29 erzeugte Vorspannung wirkt in Richtung des Pfeiles 44 in Fig. 4, d.h. in Richtung auf eine Rückstellung der Spreizkrallen 6, 7.

Im zusammengebauten Zustand der Spreizkrallenvorrichtung befindet sich jedes Federelement 28, 29 mit seinem unteren Abschnitt 30 so in der hinterschnittenen Aussparung 19 bzw. an der Lasche 18, daß die beiden Federklemmschenkel 31, 32 zwischen der Aussparung 19 und den Flächen 41, 42 zu liegen kommen und damit jedes Federelement 28, 29 sicher gegenüber der betreffenden Spreizkralle 6, 7 halten.

Jede Spreizkralle 6, 7 ist durch die Füße 22, 23 in die Öffnungen 5a, 5b eingesetzt, derart, daß die Spreizkrallen 6, 7 über einen vorbestimmten Schwenkbereich um eine Drehachse schwenkbar sind, wie dies vorstehend erläutert ist. Jede Stellschraube 12 dient zum Spreizen der betreffenden Spreizkralle 6, 7 in der zum Pfeil 44 entgegengesetzten Richtung und gegen die Vorspannung der Federelemente 28, 29. Ein Zurückdrehen der Stellschrauben 12, 13 bewirkt damit, daß die betreffende Spreizkralle 6, 7 selbsttätig in Richtung des Pfeiles 44 in Fig. 4 zurückverlagert wird.

Durch das Eindrehen der Stellschrauben 12, 13 wird das zugehörige Federelement 28, 29 kontinuierlich in die Gewindebohrung 21 eingedreht und bewirkt eine Verstellung der betreffenden Spreizkralle in der zum Pfeil 44 in Fig. 4 entgegengesetzten Richtung und zugleich eine Erhöhung der Vorspannkraft der Federelemente 28, 29 in Richtung des Pfeiles 44.

Fig. 4 zeigt in vollausgezogener Darstellung die Lage der Spreizkralle 6 in der Ausgangsposition. Mit 6' ist eine Position der Spreizkralle 6 dargestellt, in welcher sie gegen die Einbaudose 26 greift und dabei mit der Kralle 6a sich in die Wandeinbaudose 26 einkrallt. Aus Fig. 4 ist ferner ersichtlich, daß sich auch die Gabelabschnitte 34a, 34b abhängig von der Position der Spreizkralle 6 lagemäßig verändern. Die Ausgangsposition des Gabelabschnittes 34a ist voll ausgezeichnet, während eine Fixierposition gestrichelt dargestellt und mit 34a' bezeichnet ist.

Während der Verstellung der Spreizkrallen 6, 7 in die Verankerungsposition und auch bei der Verstellung der Spreizkrallen 6, 7 in eine Ausgangsposition zurück erfolgt vorteilhafterweise die Bewegung der Spreizkrallen 6, 7 exakt über einen vorgegebenen Schwenkbereich. Dadurch, daß die Spreizkrallen 6, 7 entsprechend Fig. 5 gerade verlaufende Füße 22, 23 aufweisen, wird jegliche Verkantung oder das Einnehmen einer ungünstigen Position während des Verschwenkens verhindert.

Die erfindungsgemäße Spreizkrallenvorrichtung zeichnet sich somit dadurch aus, daß bei Verwendung bisher bekannter Spreizkrallen lediglich durch den zusätzlichen Einbaues eines preiswerten Federelementes die Rückstellfunktion der Spreizkrallen 6, 7 gewährleistet wird und es wird der zusätzliche Vorteil erreicht, daß die Spreizkrallen 6, 7 nach dem Einsetzen mit ihren Füßen 22, 23 im Gegensatz zum Stand der Technik hinsichtlich der Füße nicht mehr umgebogen werden müssen. Dadurch entfällt ein zusätzlicher Arbeitsvorgang.

Aus vorstehender Beschreibung ist ersichtlich, daß die Breite des Endes des Federelementes 30 geringfügig kleiner ist als die Breite der durch die Lasche 18 definierten Aussparung 19 der betreffenden Spreizkralle 6, 7. Auf diese Weise wird sichergestellt, daß nach dem Einsetzen jedes Federelementes 34 der mit den Klemmschenkeln 31 , 32 versehene Abschnitt 30 in die Aussparung 19 hineinverlagerbar ist, derart, daß die Klemmschenkel 31, 32 an der hinteren Fläche der mit 41, 42 bezeichneten Abschnitte sich abstützen.

Jedes Federelement 28, 29 besteht vorzugsweise aus einem nichtrostenden Federbandstahl.

### Bezugszeichenliste

- 1: Spreizkrallenvorrichtung
- 2: Installationsschalter
- 3: Tragplatte
- 3a: Ecke
- 3b: Schlitz
- 3c: Ausnehmung
- 4: Schaltergehäuse
- 5a: Lageröffnung
- 5b: Lageröffnung
- 6: Spreizkralle
- 6: Fixierposition der Spreizkralle
- 6a: Kralle
- 7: Spreizkralle
- 8: Vertiefter Abschnitt
- 10: Öffnung
- 11: Öffnung
- 12: Stellschraube
- 13: Stellschraube
- 15: Schenkel
- 16: Schenkel
- 17: Wand
- 18: Lasche
- 19: Aussparung
- 20: Abschnitt
- 21: Gewindebohrung
- 22: Fuß
- 23: Fuß
- 24: Schräge
- 25: Abflachung
- 26: Wandeinbaudose
- 28: Federelement
- 29: Federelement
- 30: Ende
- 31: Klemmschenkel
- 32: Klemmschenkel
- 34: gabelförmiges Ende
- 34a: Gabelabschnitt
- 34a: Fixierposition des Gabelabschnitts
- 34b: Gabelabschnitt
- 35: Schlitz
- 36a: Abstützfuß
- 36b: Abstützfuß
- 38: Schrägfläche
- 40: Gerade Fläche
- 41: Fläche
- 42: Fläche

## Patentansprüche

1. Unterputz-Installationsgerät mit einer Tragplatte (3) zur Anlage an dem Rand einer Putzöffnung und einem in die Putzöffnung einsetzbaren Gerätegehäuse (4), das mit wenigstens einer Spreizkralle (6, 7) in der Putzöffnung mittels einer gegen eine Rückstellfeder (28, 29) arbeitenden Stellschraube (12, 13) befestigbar ist,
**dadurch gekennzeichnet, dass** sich die Stellschraube (12, 13) an der Tragplatte (3) abstützt;
dass die Spreizkralle (6, 7,) an der Tragplatte (3) schwenkbar gelagert ist; und
dass die Spreizkralle eine hinterschnittene Aussparung (19) mit einer Lasche (18) aufweist, die eine Gewindebohrung (21) für den Eingriff der Stellschraube (12, 13) besitzt.

2. Gerät nach Anspruch 1, **dadurch gekennzeichnet, dass** die Rückstellfeder (28, 29) ein Biegefederelement ist.

3. Gerät nach Anspruch 2, **dadurch gekennzeichnet, dass** das Biegefederelement (28, 29) aus einer Blattfeder aus nicht rostendem Federbandstahl besteht.

4. Gerät nach einem der vorangehenden Ansprüche, **dadurch gekennzeichnet, dass** ein erstes Ende (34) der Rückstellfeder (28, 29) gabelförmig ausgebildet ist und einen Führungsschlitz (35) für die Stellschraube (12) aufweist.

5. Gerät nach Anspruch 4, **dadurch gekennzeichnet, dass** das gabelförmige Ende (34) der Rückstellfeder (28, 29) mit Abstützfüßen (36a, 36b) zum Abstützen auf der Unterseite der Tragplatte (3) versehen ist.

6. Gerät nach wenigstens einem der vorangehenden Ansprüche, **dadurch gekennzeichnet, dass** an einem zweiten Ende (30) jeder Rückstellfeder (28, 29) Klemmeinrichtungen (31, 32) vorgesehen sind.

7. Gerät nach Anspruch 6, **dadurch gekennzeichnet, dass** die Klemmeinrichtungen (31, 32) als schräg zur Fläche der Rückstellfeder (28, 29) abgebogene Schenkel ausgebildet sind.

8. Gerät nach Anspruch 7, **dadurch gekennzeichnet, dass** die hinterschnittene Aussparung (19) jeder Spreizkralle (6, 7) das mit Klemmschenkeln (31, 32) versehene Ende (30) der Rückstellfeder (28, 29) aufnimmt.

9. Gerät nach einem der vorangehenden Ansprüche, **dadurch gekennzeichnet, dass** jede Spreizkralle (6, 7) zwei im wesentlichen parallel zueinander verlaufende Füße (22, 23) aufweist, die in der Tragplatte (3) ausgebildete Öffnungen (5a, 5b) eingesetzt sind.

10. Gerät nach einem der vorangehenden Ansprüche, **dadurch gekennzeichnet, dass** die Lasche (18) zur Abstützung des Fußabschnittes des zweiten Endes (30) des Federelements (28, 29) vorgesehen ist.

11. Gerät nach Anspruch 10, **dadurch gekennzeichnet, dass** jede Lasche (18) einen abgewinkelten Abschnitt (20) mit der Gewindebohrung (21) und eine Schräge (24) aufweist.

## Claims

1. In-wall installation device comprising a base plate (3) for the arrangement on the edge of an in-wall opening and a device housing (4) insertable in the in-wall opening and attachable with at least one retractable mounting claw (6, 7) in the in-wall opening by means of an adjusting screw (12, 13) acting against a readjusting spring (28, 29),
**characterized in that**
the adjusting screw (12, 13) is supported on the base plate (3);
the mounting claw (6, 7) is pivotably mounted on the base plate (3); and
the mounting claw comprises an undercut recess (19) with a flap (18) having a threaded bore (21) for the engagement of the adjusting screw (12, 13).

2. Device according to claim 1, **characterized in that** the readjusting spring (28, 29) is a spiral spring member.

3. Device according to claim 2, **characterized in that** the spiral spring member (28, 29) is formed of a plate spring made of stainless spring band steel.

4. Device according to one of the preceding claims, **characterized in that** a first end (34) of the readjusting spring (28, 29) is fork-shaped and comprises a guiding slot (35) for the adjusting screw (12).

5. Device according to claim 4, **characterized in that** the fork-shaped end (34) of the readjusting spring (28, 29) comprises supporting feet (36a, 36b) for the support on the underside of the base plate (3).

6. Device according to at least one of the preceding claims, **characterized in that** clamping means (31, 32) are provided at a second end (30) of each readjusting spring (28, 29).

7. Device according to claim 6, **characterized in that** the clamping means (31, 32) are formed as legs diagonally bent toward the surface of the readjusting spring (28, 29).

8. Device according to claim 7, **characterized in that** the undercut recess (19) of each mounting claw (6, 7) receives the end (30) of the readjusting spring (28, 29) provided with clamping legs (31, 32).

9. Device according to one of the preceding claims, **characterized in that** each mounting claw (6, 7) comprises two legs (22, 23) extending substantially parallel to each other and inserted in openings (5a, 5b) formed in the base plate (3) .

10. Device according to one of the preceding claims, **characterized in that** the flap (18) is provided to support the foot section of the second end (30) of the spring member (28, 29).

11. Device according to claim 10, **characterized in that** each flap (18) comprises an angular portion (20) with the threaded bore (21) and a slant (24).

## Revendications

1. Appareil d'installation encastré comprenant une plaque de support (3) pour s'appliquer sur le bord d'une ouverture ménagée dans le crépi et un boîtier d'appareil (4) qui peut être inséré dans l'ouverture du crépi et peut être fixé avec au moins une griffe rétractable (6, 7) dans l'ouverture du crépi au moyen d'une vis de réglage (12, 13) opérant à l'encontre d'un ressort de rappel (28, 29),
**caractérisé en ce que** :
la vis de réglage (12, 13) s'appuie sur la plaque de support (3);
la griffe rétractable (6, 7) est montée à pivotement sur la plaque de support (3); et
la griffe rétractable présente une cavité (19) en contre-dépouille avec une patte (18) qui possède un orifice fileté (21) pour l'engagement de la vis de réglage (12,13).

2. Appareil selon la revendication 1, **caractérisé en ce que** le ressort de rappel (28, 29) est un élément de ressort flexible.

3. Appareil selon la revendication 2, **caractérisé en ce que** l'élément de ressort flexible (28, 29) est constitué d'un ressort à lame formé d'acier en bande élastique inoxydable.

4. Appareil selon l'une quelconque des revendications précédentes, **caractérisé en ce que** la première extrémité (34) du ressort de rappel (28,29) a une forme d'étrier et présente une fente de guidage (25) pour la vis de réglage (12).

5. Appareil selon la revendication 4, **caractérisé en ce que** l'extrémité en étrier (34) du ressort de rappel (28, 29) est pourvue de pieds d'appui (36a, 36b) pour s'appuyer sur la partie inférieure de la plaque de support (3).

6. Appareil selon au moins l'une quelconque des revendications précédentes, **caractérisé en ce que** des dispositifs de calage (31, 32) sont prévus à une seconde extrémité (30) de chaque ressort de rappel (28, 29).

7. Appareil selon la revendication 6, **caractérisé en ce que** les dispositifs de calage (31, 32) se présentent sous la forme d'ailes repliées en oblique par rapport à la surface du ressort de rappel (28, 29).

8. Appareil selon la revendication 7, **caractérisé en ce que** la cavité en contre-dépouille (19) de chaque griffe rétractable (6, 7) reçoit l'extrémité (30) du ressort de rappel (28, 29) pourvue d'ailes de calage (31, 32).

9. Appareil selon l'une quelconque des revendications précédentes, **caractérisé en ce que** chaque griffe rétractable (6, 7) présente deux pieds (22, 23) s'étendant sensiblement parallèlement l'un à l'autre, qui sont insérés dans des ouvertures (5a, 5b) ménagées dans la plaque de support (3).

10. Appareil selon l'une quelconque des revendications précédentes, **caractérisé en ce que** la patte (18) est prévue pour s'appuyer sur la section de pied de la seconde extrémité (30) du ressort de rappel (28, 29).

11. Appareil selon la revendication 10, **caractérisé en ce que** chaque patte (18) présente une section coudée (20) avec l'orifice fileté (21) et un chanfrein (24).
